# EUROPEAN PATENT SPECIFICATION

(11) **EP 0 426 278 B1**
(45) Date of publication and mention of the grant of the patent: **30.11.1994**
(21) Application number: 90309001.7
(22) Date of filing: 16.08.1990
(51) Int. Cl.: F04C 15/04

(54) **Dual capacity fluid pump**
Fluidpumpe für Doppelfördermenge
Pompe à fluide avec double capacité

(30) Priority: 31.10.1989 US 429595
(43) Date of publication of application: 08.05.1991
(73) Proprietor: Borg-Warner Automotive, Inc., Troy Michigan 48084 (US)
(72) Inventor: Haley, William J., Ithaca, New York 14850 (US); Swanson, Glenn E., Lansing, New York 14882 (US)
(74) Representative: Allden, Thomas Stanley

(56) References cited:
- US-A- 4 065 228
- US-A- 4 080 979
- US-A- 4 222 712
- US-A- 4 502 845

## Description

This invention relates generally to positive displacement gear pumps that are adapted particularly, but not exclusively, to be used in a control system for an automatic transmission for an automotive vehicle wherein the operating speed range of the pump extends from a low speed value corresponding to an engine idle condition to a high speed value corresponding to operation of the vehicle engine under high speed cruising conditions.

A preferred embodiment of the present invention is adapted for use in a structural environment such as that described in US-A-4347765 which comprises a transmission having a hydrokinetic torque converter and multiple-ratio, compound, planetary gearing. The relative motion of the elements of the gearing is controlled by fluid pressure operated clutches and brakes. Fluid pressure operated servos are used to selectively engage and release the clutches and brakes to effect ratio changes.

In the transmission disclosed in the '765 patent, the lowest ratio is used for accelerating from a standing start. The overall torque multiplication ratio of the transmission decreases until a final fourth ratio, which is an overdrive ratio, is obtained. The ratio changes are accomplished by an automatic control valve system. That system selectively distributes pressure from a fluid pressure pump to the fluid pressure operated servos for engaging and releasing the clutches and brakes.

The transmission pump disclosed in the '765 patent is a positive displacement gear pump located in a pump body secured to the transmission housing intermediate the hydrokinetic torque converter and the multiple ratio gearing. The torque input element of the positive displacement pump is connected drivably to the impeller of the hydrokinetic torque converter. It, in turn, drivably engages a second gear element of the positive displacement pump.

The operating speed range for the transmission of the '765 patent varies from engine idle speed to highway speed, the latter usually being a multiple of up to ten times the idling speed. When the vehicle is operating at low speeds and the engine throttle for the vehicle is advanced as the vehicle accelerates from a standing start, the torque converter impeller speed is higher than the idling speed but is still substantially lower than the final cruising speed of the engine experienced under steady state highway driving conditions.

A relatively high control circuit pressure must be maintained by the pump, especially during acceleration from a standing start with advanced throttle. It is under those conditions that the torque transfer requirements for the gearing and the fluid pressure operated servo are at a maximum, and substantial energy is required to drive the pump. This is sometimes referred to as a parasitic loss. The capacity of the pump must be designed, therefore, so that it is large enough to accommodate the maximum flow and pressure requirements when the demands on the pump are greatest. This necessarily results in excessive capacity for the pump when the vehicle is operating at high speeds under cruising conditions and the pressure and fluid flow requirements of the servos are less.

We are aware of attempts that have been made to solve the problem of excess pumping capacity in transmission pumps for automatic transmissions. One example is shown in US-A-4502845 where a multi-stage gear pump and control valve arrangement is provided. That gear pump comprises a main drive gear that meshes with two secondary gears to define two pumping stages. The secondary pump is relieved of the burden of supplying circuit pressure by connecting the secondary pump to a low pressure sump region through a regulator valve. When the flow requirements of the pump are less, the valve responds to a pressure buildup on the downstream side of a control orifice. Upon an increase in the pump speed, the valve regulates the pressure in the discharge passage causing the discharge side of the secondary pump to become exhausted to the common sump, thereby reducing the pumping horsepower when the flow requirements are reduced.

Another prior art teaching is shown in US-A-4204811, which discloses a compound pump with two independent gear pumps and a common driver. The pump is capable of supplying both a high pressure circuit with low flow requirements and a low pressure circuit with high flow requirements. A priority valve in a bypass flow path from the high pressure side of the pump assembly supplements the flow requirements of the low pressure load. The pump itself includes a pair of gear pumps with a common driver as in the case of the pump of the aforesaid US-A-4502845.

Other prior art teachings attempt to compensate for a reduced pumping requirement by providing a bypass valve for one of a pair of pumping gears. The bypass valve acts in response to a speed signal so that there is a reduced pump power demand as one of the pumps operates against zero pressure rather than against circuit pressure. An example of this arrangement is shown in US-A-4245964.

Other relevant prior art teachings are shown in US-A-2887060 and FR-A-1246014.

In the aforementioned French '014 patent there is generally disclosed a dual capacity fluid pump comprising first and second pairs of positive displacement pumping elements adapted for operation throughout a range of speeds, each of said pairs having a fluid inlet port and a fluid outlet port, the outlet port for the first pair communicating with a flow delivery passage for the pump, one-way flow valve means for establishing one-way communication between the outlet ports at low pump speeds whereby flow from the outlet port for the second pair is transferred to the delivery passage, and flow control valve means for establishing communication at high pump speeds between the inlet port and the outlet port of the second of the pairs of pumping elements and for interrupting said communication at low pump speeds.

More particularly, the flow control valve means of the dual capacity fluid pump of the aforementioned FR-A-1246014 is actuated by pressure fluid from the first and second pairs of the positive displacement pumping elements, which is a feature also of the structure disclosed in the aforesaid US-A-2887060.

In accordance with the present invention as claimed, the aforementioned generally disclosed dual capacity fluid pump is characterized by a pump driven speed pressure signal generating means comprising a flow control pump having a fluid outlet port, a signal passage communicating with the flow control pump outlet port and a control orifice means communicating with the signal passage for developing a speed pressure in the signal passage, and is further characterized in that the flow control valve means communicates with the signal passage for establishing the communication between the inlet port and the outlet port of the second pair of pumping elements in response to an increase in said speed pressure signal.

Discussing now, in somewhat general terms, the preferred embodiment of our invention, it has a simplified flow control valve and a dual stage positive displacement pump assembly wherein the discharge side of one pump is adapted to be connected to the discharge side of a second pump at low vehicle speeds. The discharge side of the second pump is adapted to be connected to its inlet side, however, when the flow control valve is shuttled from one position to the other. Upon an increase in the pump driving speed, the second pump operates against a zero net pressure differential, thereby substantially reducing the horsepower required to drive the pump assembly.

Because excess fluid is not pumped at high pump speeds against a high pressure, the fluid passages may be downsized. This feature results in an economy of space and a reduced manufacturing cost.

We have also provided a simplified means for obtaining a pump speed signal. This includes a pair of simple flow control pump gears having a minimal power demand. These pump gears define a small capacity pump that communicates at its inlet side with the intake side of the main positive displacement pumping stages. The outlet side of the flow control pump gears communicates with a flow control valve as well as with a controllable orifice between the discharge side of the flow control pump gears and the exhaust region. Thus, the pressure developed on the discharge side of the flow control pump gears depends upon the driving speed because the pressure differential across the controllable orifice will increase as the flow control pump gear speed increases. If the flow control pump gear speed is in excess of a predetermined value, the flow control valve will shuttle to a position that will allow the discharge side of one of the main gear pumping stages to become connected to the common inlet for the main pumping stages. The flow control pump gears are driven at a speed that is proportional to the speed of the main pump gears.

When the pump speed increases beyond a calibrated value, the flow control valve responds to the increased flow to exhaust one side of one of the sets of main pumping gears so that only a single pumping stage supplies the pressure requirements.

Our simplified valve arrangement makes it unnecessary to provide complex speed sensors and circuit bypass valve structure of the kind shown in the prior art. The flow control pump gears have minimal flow requirements and have only a minimal pumping loss compared to the horsepower savings that is effected by rendering one of the main pumping gear stages inactive at high speeds beyond a transition speed value.

The improved dual capacity pump of the preferred embodiment of our invention is self-compensating for changes in viscosity resulting from changes in oil temperature. Normally, in a transmission system of this kind, fluid leakage in the valve circuit associated with the transmission pump increases as the operating temperatures increase. Furthermore, the leakage bypass flow around the pump gear itself increases as the operating temperatures increase. The flow control pump gears of our invention may be designed so that the coefficient of thermal expansion of the material of which the flow control pump gears are formed may match the coefficient of thermal expansion of the main gears. For example, a suitable molded resin or plastic may be used. Thus, an increase in temperature will delay the response of the flow control valve to an increase in the speed of the flow control pump gears. This is a desirable characteristic because any delay in the response of the flow control valve resulting from increased bypass flow across the flow control pump gears will occur under the same conditions that cause an increase in the flow requirements of the transmission circuit itself and the leakage flow of the main pump gears. The change in the shift point at which the flow control valve will shuttle from one position to the other thus provides an inherent compensation for changes in the flow requirements because of fluid viscosity changes.

Only a very small outlet pressure is required at the outlet port for the flow control pump gears in a transmission environment. For automotive vehicle transmissions, the pressure may be a low as 10-15 psi. The horsepower required to drive the flow control pump gears, therefore, is very small.

The opportunity for a malfunction of the pump assembly is reduced because of the simplicity of the design itself in comparison to the rather complex circuit designs of the prior art, especially if electronically installed solenoid operated bypass valves were to be used. The latter normally would require an electronic speed sensor and an electronic control module having an electrical pulse generator and a clock circuit for developing a digital signal that may be used by an electronic processor to produce an appropriate speed signal for the solenoid valve.

In order that the invention may be well understood the preferred embodiment thereof, which is given by way of example, will now be described in further detail and with reference to the accompanying drawings, in which:
Figure 1 is a cross-sectional view in schematic form showing pump gears of a dual stage pump assembly of the kind that may be used in a transmission circuit particularly the kind shown in the aforementioned US-A-4347765. The flow control valve shown in Figure 1 is in a low speed condition;
Figure 2 is a view similar to Figure 1, although the flow control valve has been shuttled to its high speed position; and
Figure 3 is a chart showing the estimated power requirements for our dual capacity pump assuming a fifty percent overall pump efficiency at 10 atmospheres.

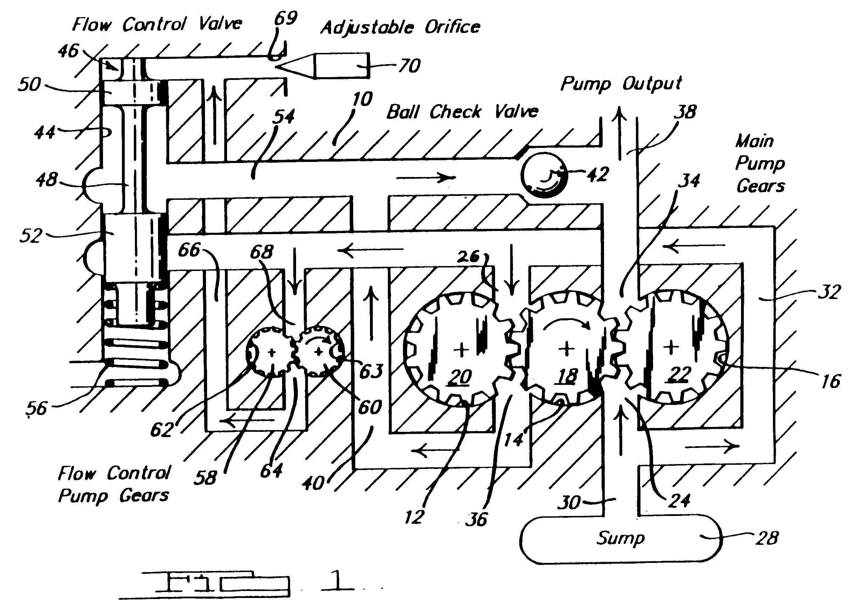

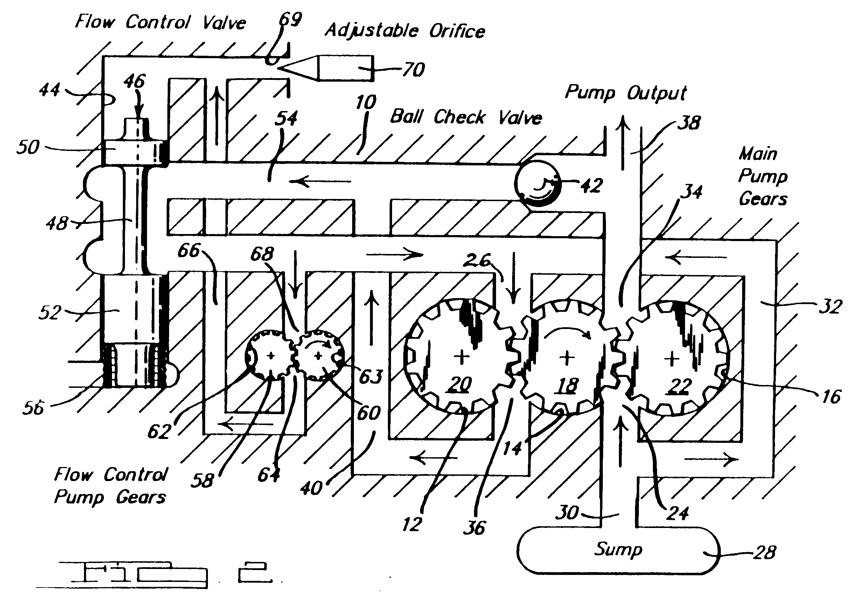

As shown in Figures 1 and 2 a pump housing is designated generally by reference numeral 10. Figures 1 and 2 of the drawings show a schematic representation of a pump housing for a transmission of the kind shown in the '765 patent, although the pump of the '765 patent is a crescent gear pump with internal and external pump gears rather than an external gear pump as shown in the drawings. The housing of our pump is provided with three pump gear openings 12, 14 and 16 which are cylindrical openings having their geometric central axes in spaced, parallel relationship. The openings overlap, as indicated in the drawings, so that opening 14 and opening 12 have common portions. The same is true of the pair of openings 14 and 16, which overlap at a common region.

Opening 14 receives an external gear pump element 18. Corresponding external gear pump elements 20 and 22 are received in openings 12 and 16, respectively. Element 18 serves as a pump driving element that is connected to a torque input element of the transmission, such as a torque converter impeller, which is driven by the internal combustion engine.

Element 18 drivably engages elements 20 and 22 to provide a pumping action. It is driven in the direction of the arrow in Figures 1 and 2. Each pair of the gears 18, 20 and 22 has a pump inlet and a pump outlet. The pump inlet for the pair of gear elements 18 and 22 is shown at 24 and the corresponding pump inlet for the pair of gear elements 18 and 20 is shown at 26.

A low pressure sump 28 communicates with inlet 24 through passage 30, which communicates with inlet 26 through passage 32.

The high pressure fluid delivery port for the pair of gear elements 18 and 22 is shown at 34. A corresponding high pressure delivery port for gear element pair 20 and 18 is shown at 36. Delivery port 34 communicates with pressure delivery passage 38, which may communicate with a control valve system for an automatic transmission or the like. The delivery port 36 for the gear element pair 18 and 20 communicates through passage 40 with the passage 38 through one-way flow check valve 42. This valve comprises a valve element that is seated on an annular seat so that flow from passage 38 to passage 40 is prevented, although flow in the opposite direction from passage 40 to passage 38 is permitted.

Passage 40 communicates with valve chamber 44 of a flow control valve shown generally at 46. Valve 46 comprises a valve spool 48 having spaced valve lands 50 and 52. Communication between valve opening 44 and passage 40 is provided by branch passage 54.

Valve spool 48 is biased in an upward direction, as shown in the drawings, by valve spring 56. When it is in the position shown in Figure 1, low pressure supply passage 32 is blocked by valve land 52. Thus, no communication is established between the supply side of the pair of gear pump elements 18 and 20 and passage 54. If the valve spool is shifted in a downward direction as indicated in Figure 2, communications is established between the supply side of the gear pump elements 18 and 20 and passage 54. Thus, the high pressure side of the gear pump elements 18 and 20 communicates with the low pressure sump, and fluid pumped by the pump gear elements 18 and 20 is circulated from port 36 to the port 26 under minimal pressure. There is only minimal pressure differential created by reason of the pumping action of the gear pump elements 18 and 20.

A pair of flow control pump gears 58 and 60 is connected drivably to the converter impeller or to the driving pump gear element so that they are driven at speeds proportional to engine speed. These pump gears are situated in cooperating pump gear cavities 62 and 63. When the flow control pump gears rotate in the direction indicated by the arrow, fluid is delivered to pump outlet port 64 and to control pressure passage 66. Inlet port 68 for the flow control pump gears communicates with the low pressure passage 32 that communicates with the sump 28.

Control pressure passage 66 communicates with valve chamber 44 at the upper side of land 50 thereby establishing a control pressure force that opposes the force of the spring 56. Control pressure passage 66 communicates with adjustable control orifice 69. An adjustable valve element 70 registers with the orifice 69 so that the effective size of the orifice can be controlled.

As the driven speed of the flow control pump gears increases, the flow through control pressure passage 66 increases. An increase in flow in passage 66 will result in an increase in the pressure in passage 66 because of the flow restriction at adjustable flow control orifice 69. The increase in pressure results in an increasing force on the valve element 48. When the force of the spring 56 is overcome by the force of the pressure in control pressure passage 66, the spring will yield, thereby establishing communication between pressure supply passage 32 and passage 54. This bypasses the fluid delivered by the pair of gear pump elements at 18 and 20.

As soon as passage 54 communicates with the low pressure passage 32, check valve 42 closes so that fluid is supplied to the pressurized delivery passage 38 only by the single pair of gear pump elements 18 and 22. This condition is seen in Figure 2.

Prior to the time that flow control valve element 48 is shifted, both pairs of gear pump elements contribute to the flow delivery at passage 38. After the transition point is reached at which valve element 48 is shifted, the pumping horsepower required to drive pump gear element pair 18 and 20 is reduced to substantially zero. That is the condition indicated in Figure 2. The point at which that transition occurs can be controlled by appropriately adjusting valve element 70 to vary the size of the flow control orifice 68.

If the temperature of the oil is high, the leakage around the flow control pump gears is higher than it is when the oil is cold. Thus, the flow control pump gears must be driven at a higher speed to effect a sufficient pressure at the flow control valve to shift the valve element 48 to the position shown in Figure 2. The effective temperature of the fluid pumped by the flow control pump gears is the same generally as the effective temperature of the fluid at the main pump gears. Thus, at high temperatures the bypass flow around the pump gear elements 20, 18 and 22 is increased. Furthermore, the leakage in the valve circuit from the transmission is higher when the temperature is higher, so a greater volume of fluid must be delivered to passage 38 when the temperature is high than when it is cold. It is desirable therefore, for the transition point at which the valve element 48 is shifted to be higher when the temperature is higher. This is exactly the effect that is achieved because, as mentioned previously, the flow control pump gears must be driven at a higher speed to effect a transition from the tandem pumping mode to the single stage pumping mode at high temperatures.

Ideally, the coefficient of thermal expansion of the material of which the flow control pump gears are formed should be slightly larger than the coefficient of thermal expansion of the material of which the main pump gears are formed. Then there will be over-compensation for temperature changes to accommodate for increased leakage in the control valve system as temperature increases. The flow control pump gears may be made by an inexpensive plastic molding process since the differential pressure on which they are required to act is rather minimal. For example, the maximum pressure developed by the flow control pump gears may be only 10 or 15 psi whereas the maximum pressure developed by the main pump gears may be as high as 300 psi.

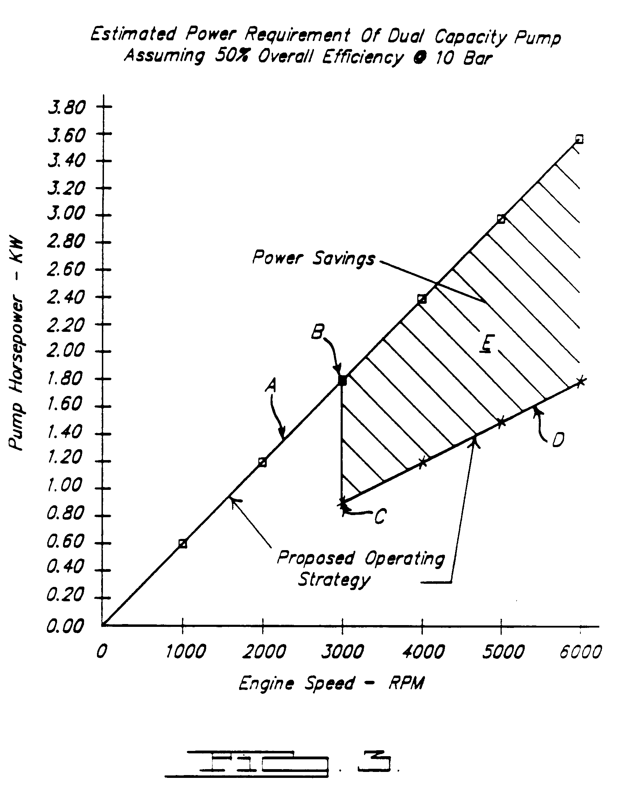

In Figure 3, we have shown an estimate of the power requirements for our improved dual capacity pump assuming a 50% overall pump efficiency at a pressure equal to 10 atmospheres. Figure 3 shows the relationship between pumping horsepower measured in kilowatts and engine speed. When both pumping stages are active, line A represents the linear pumping characteristics. The transition point for the change from the dual pumping mode to the single pumping mode is shown at B. After point B is reached, the pumping horsepower drops to a value indicated by symbol C. Thereafter, an increase in speed with only the single pumping stage active is represented by line D. Again, this relationship is generally linear, but it falls substantially below the corresponding portion of line A. Thus, the effective power savings is indicated by the shaded region E in Figure 3.

## Claims

1. A dual capacity fluid pump comprising first (18, 22) and second (18, 20) pairs of positive displacement pumping elements adapted for operation throughout a range of speeds, each of said pairs (18, 22; 18, 20) having a fluid inlet port (24; 26) and a fluid outlet port (34; 36), the outlet port (34) for the first pair (18, 22) communicating with a flow delivery passage (38) for the pump, one-way flow valve means (42) for establishing one-way communication between the outlet ports (34, 36) at low pump speeds whereby flow from the outlet port (36) for the second pair (18, 20) is transferred to the delivery passage (38), and flow control valve means (46) for establishing communication at high pump speeds between the inlet port (26) and the outlet port (36) of the second (18, 20) of the pairs of pumping elements (18, 20; 18, 22) and for interrupting said communication at low pump speeds, characterised by a pump driven speed pressure signal generating means comprising a flow control pump (58, 60) having a fluid outlet port (64), a signal passage (66) communicating with the flow control pump outlet port (64) and a control orifice means (69, 70) communicating with the signal passage (66) for developing a speed pressure in the signal passage (66), the flow control valve means (46) communicates with the signal passage (66) for establishing the communication between the inlet port (26) and the outlet port (36) of the second pair of pumping elements (18, 20) in response to an increase in said speed pressure signal.

2. A dual capacity fluid pump adapted to be driven at speeds within a range of speeds, comprising first (18, 22) and second (18, 20) positive displacement pumps, each pump (18, 22; 18, 20) having an inlet port (24; 26) and an outlet port (34; 36), a pump delivery passage (38) communicating with the outlet port (34) of one (18, 22) of the pumps (18, 22; 18, 20), one-way flow valve means (42) connecting the outlet port (36) for the other (18, 20) of the pumps (18, 22; 18, 20) with the delivery passage (38) at low speeds in said range of speeds, whereby the flow output of both of the pumps (18, 22; 18, 20) is supplied to the delivery passage (38) at high driven speeds in said range of speeds, and pump driven speed responsive flow control valve means (46) for connecting the inlet (26) and outlet (36) ports for the other pump (18, 20) at high driven speeds in said range of speeds, characterised by a pump driven speed pressure signal generating means comprising a flow control pump (58, 60) having a fluid outlet port (64), a signal passage (66) communicating with the flow control pump outlet port (64) and a control orifice means (69, 70) communicating with the signal passage (66) for developing a speed pressure in the signal passage (66), the flow control valve means (46) communicates with the signal passage (66) for establishing the communication between the inlet port (26) and the outlet port (36) of the other pump (18, 20) in response to an increase in said speed pressure signal.

3. A dual capacity fluid pump as claimed in claim 1, wherein the flow control pump (58, 60) comprises a pair of pump gears (58, 60) having an inlet port (68) communicating with a low pressure fluid supply (28), the flow control valve means (46) comprising a shuttle valve element (48) with a speed pressure area thereon, means (56) biasing the shuttle valve element (48) with a force opposing the force of the speed pressure, the shuttle valve element (48) having spaced valve lands (50, 52) providing communication between the inlet (26) and outlet (36) ports of the second pair of pumping elements (18, 20) as the shuttle valve element (48) is shifted by the speed pressure against the force of the biasing means (56).

4. A dual capacity fluid pump as claimed in claim 2, wherein the flow control pump (58, 60) comprises a pair of pump gears (58, 60) having an inlet port (68) communicating with a low pressure fluid supply (28), the flow control valve means (46) comprising a shuttle valve element (48) with a speed pressure area thereon, a valve spring (56) acting on the shuttle valve element (48), the shuttle valve element (48) having spaced valve lands (50, 52) providing communication between the inlet (26) and outlet (36) ports of the other (18, 20) of the pumps (18, 22; 18, 20) as the shuttle valve element (48) is shifted by the speed pressure against the force of the valve spring (56).

5. A dual capacity fluid pump as claimed in claim 2 or claim 4, wherein the first (18, 22) and second (18, 20) pumps have a common pump gear (18), one element (20; 22) of each pump (18, 22; 18, 20) comprising a pump gear (20; 22) meshing with the common pump gear (18) thereby forming two pumping stages.

6. A dual capacity fluid pump as claimed in claim 1 or claim 3, wherein the pumping element pairs (18, 22; 18, 20) have a common pump gear (18), one element (20; 22) of each pair (18, 22; 18, 20) comprising a pump gear (20; 22) meshing with the common pump gear (18) thereby forming two pumping stages.

## Patentansprüche

1. Zweistrompumpe mit einem ersten Paar (18, 22) und einem zweiten Paar (18, 20) Verdrängerpumpglieder für einen Betrieb in einem Drehzahlbereich, wobei Jedes dieser Paare (18, 22; 18, 20) eine Einlaßöffnung (24; 26) und eine Auslaßöffnung (34; 36) aufweist, die Auslaßöffnung (34) für das erste Paar (18, 22) mit einem Förderkanal (38) für die Pumpe verbunden ist, einem Einwegventil (42), das eine Einwegverbindung zwischen den Auslaßöffnungen (34, 36) bei niedrigen Pumpendrehzahlen herstellt, wodurch der Strom aus der Auslaßöffnung (36) für das zweite Paar (18, 20) auf den Förderkanal (38) übertragen wird, und einer Durchflußsteuerventileinrichtung (46), die eine Verbindung zwischen der Einlaßöffnung (26) und der Auslaßöffnung (36) des zweiten Paares (18, 20) der Pumpglieder (18, 20; 18, 22) bei hohen Pumpdrehzahlen herstellt und diese Verbindung bei niedrigen Pumpdrehzahlen unterbricht, gekennzeichnet durch einen pumpengetriebenen Drehzahldruck-Signalgeber in Form einer Durchflußsteuerpumpe (58, 60) mit einer Auslaßöffnung (64), einem Signalkanal (66), der mit der Auslaßöffnung (64) der Durchflußsteuerpumpe verbunden ist, und einer Steueröffnung (69, 70), die mit dem Signalkanal (66) in Verbindung steht, um einen Drehzahldruck in dem Signalkanal (66) zu entwickeln, wobei die Durchflußsteuerventileinrichtung (46) mit dem Signalkanal (66) verbunden ist, um die Verbindung zwischen der Einlaßöffnung (26) und der Auslaßöffnung (36) des zweiten Paares Pumpglieder (18, 20) in Abhängigkeit von einer Vergrößerung des Drehzahldrucksignals herzustellen.

2. Zweistrompumpe, die mit Drehzahlen innerhalb eines Drehzahlbereiches antreibbar ist, mit einer ersten Verdrängerpumpe (18, 22) und einer zweiten Verdrängerpumpe (18, 20), von denen jede Pumpe (18, 22; 18, 20) eine Einlaßöffnung (24; 26) und eine Auslaßöffnung (34; 36) aufweist, wobei ein Förderkanal (38) mit der Auslaßöffnung (34) einer (18, 22) der Pumpen (18, 22; 18, 20) verbunden ist, ein Einwegventil (42) die Auslaßöffnung (36) für die andere (18, 20) der Pumpen (18, 22; 18, 20) mit dem Förderkanal (38) bei niedrigen Drehzahlen in dem betreffenden Drehzahlbereich verbindet, wodurch die Fördermenge beider Pumpen (18, 22; 18, 20) bei hohen Drehzahlen in dem besagten Drehzahlbereich an den Förderkanal (38) abgegeben wird, und einer pumpengetriebenen drehzahlabhängigen Durchflußsteuerventileinrichtung (46), die die Einlaßöffnung (26) und die Auslaßöffnung (36) für die andere Pumpe (18, 20) bei hohen Drehzahlen in dem besagten Drehzahlbereich verbindet, gekennzeichnet durch einen pumpengetriebenen Drehzahldruck-Signalgeber in Form einer Durchflußsteuerpumpe (58, 60) mit einer Auslaßöffnung (64), einem Signalkanal (66), der mit der Auslaßöffnung (64) der Durchflußsteuerpumpe verbunden ist, und einer Steueröffnung (69, 70), die mit dem Signalkanal (66) in Verbindung steht, um einen Drehzahldruck in dem Signalkanal (66) zu entwickeln, wobei die Durchflußsteuerventileinrichtung (46) mit dem Signalkanal (66) verbunden ist, um die Verbindung zwischen der Einlaßöffnung (26) und der Auslaßöffnung (36) des zweiten Paares Pumpglieder (18, 20) in Abhängigkeit von einer Vergrößerung des Drehzahldrucksignals herzustellen.

3. Zweistrompumpe nach Anspruch 1, bei der die Durchflußsteuerpumpe (58, 60) zwei Pumpenzahnräder (58, 60) mit einer Einlaßöffnung (68) aufweist, die mit einem Niederdruckvorrat (28) verbunden ist, wobei die Durchflußsteuerventileinrichtung (46) ein Pendelventilglied (48) mit einem Drehzahldruckbereich aufweist, Vorspannmittel (56) das Pendelventilglied (48) mit einer der Kraft des Drehzahldrucks entgegengerichteten Kraft vorspannen, das Pendelventilglied (48) beabstandete Ventilbunde (50, 52) aufweist, die eine Verbindung zwischen der Einlaßöffnung (26) und der Auslaßöffnung (36) des zweiten Paares Pumpglieder (18, 20) herstellt, wenn das Pendelventilglied (48) von dem Drehzahldruck entgegen der Kraft der Vorspannmittel (56) verschoben wird.

4. Zweistrompumpe nach Anspruch 2, bei der die Durchflußsteuerpumpe (58, 60) zwei Pumpenzahnräder (58, 60) mit einer Einlaßöffnung (68) aufweist, die mit einem Niederdruckvorrat (28) verbunden ist, wobei die Durchflußsteuerventileinrichtung (46) ein Pendelventilglied (48) mit einem Drehzahldruckbereich aufweist, eine Ventilfeder (56) auf das Pendelventilglied (48) einwirkt, das Pendelventilglied (48) beabstandete Ventilbunde (50, 52) aufweist, die eine Verbindung zwischen der Einlaßöffnung (26) und der Auslaßöffnung (36) des anderen (18, 20) der Pumpenglieder (18, 22; 18, 20) herstellt, wenn das Pendelventilglied (48) von dem Drehzahldruck entgegen der Kraft der Ventilfeder (56) verschoben wird.

5. Zweistrompumpe nach Anspruch 2 oder 4, bei der die erste Pumpe (18, 22) und die zweite Pumpe (18, 20) ein gemeinsames Pumpenzahnrad (18) besitzen, wobei ein Glied (20, 22) jeder Pumpe (18, 22; 18, 20) aus einem Pumpenzahnrad (20; 22) besteht, das mit dem gemeinsamen Pumpenzahnrad (18) kämmt, wodurch zwei Pumpenstufen gebildet werden.

6. Zweistrompumpe nach Anspruch 1 oder 3, bei der die Pumpgliederpaare (18, 22; 18, 20) ein gemeinsames Pumpenzahnrad (18) besitzen, wobei ein Glied (20; 22) jeder Pumpe (18, 22; 18, 20) aus einem Pumpenzahnrad (20; 22) besteht, das mit dem gemeinsamen Pumpenzahnrad (18) kämmt, wodurch zwei Pumpenstufen gebildet werden.

## Revendications

1. Pompe à fluide à double capacité comprenant des première (18, 22) et seconde (18, 20) paires d'éléments de pompage volumétrique conçus pour fonctionner sur une gamme de vitesses complète, chacune desdites paires (18, 22 ; 18, 20) comportant un orifice d'admission de fluide (24 ; 26) et un orifice de refoulement de fluide (34 ; 36), l'orifice de refoulement (34) destiné à la première paire (18, 22) communiquant avec un passage de refoulement de débit (38) de la pompe, un moyen de soupape à débit unidirectionnel (42) servant à établir une communication unidirectionnelle entre les orifices de refoulement (34, 36) aux faibles vitesses de la pompe, d'où il résulte qu'est transféré le débit provenant de l'orifice de refoulement (36) de la seconde paire (18, 20) au passage de refoulement (38) ainsi que des moyens de soupape de commande de débit (46) servant à établir un communication aux vitesses élevées de la pompe entre l'orifice d'admission (26) et l'orifice de refoulement (36) de la seconde (18, 20) des paires d'éléments de pompage (18, 20 ; 18, 22) et à interrompre ladite communication aux faibles vitesse de la pompe, caractérisée par un moyen de génération de signal de pression de vitesse entraîné par pompe comprenant une pompe de commande de débit (58, 60) comportant un orifice de refoulement de fluide (64), un passage de signal (66) communiquant avec l'orifice de refoulement de la pompe de commande de débit (64) et un moyen d'orifice de commande (69, 70) communiquant avec le passage de signal (66) pour développer une pression de vitesse dans le passage de signal (66), le moyen de soupape de commande de débit (46) communiquant avec le passage de signal (66) pour établir la communication entre l'orifice d'admission (26) et l'orifice de refoulement (36) de la seconde paire d'éléments de pompage (18, 20) en réponse à une augmentation dudit signal de pression de vitesse.

2. Pompe à fluide à double capacité conçue pour être entraînée à des vitesses comprises dans une gamme de vitesses, comprenant des première (18, 22) et seconde (18, 20) pompes volumétriques, chaque pompe (18, 22 ; 18, 20) comportant un orifice d'admission (24 ; 26) et un orifice de refoulement (34 ; 36), un passage de refoulement de pompe (38) communiquant avec l'orifice de refoulement (34) de l'une (18, 22) des pompes (18, 22 ; 18, 20), un moyen de soupape à débit unidirectionnel (42) reliant l'orifice de refoulement (36) de l'autre (18, 20) des pompes (18, 22 ; 18, 20) avec le passage de refoulement (38) aux faibles vitesse de ladite gamme de vitesses, d'où il résulte que la sortie de débit des deux pompes (18, 22 ; 18, 20) est appliquée au passage de refoulement (38) aux vitesses d'entraînement élevées de ladite gamme de vitesses, et un moyen de soupape de commande de débit sensible à la vitesse d'entraînement de la pompe (46) servant à relier les orifices d'admission (26) et de refoulement (36) de l'autre pompe (18, 20) aux vitesses d'entraînement élevées de ladite gamme de vitesses, caractérisée par un moyen de génération de signal de pression de vitesse entraîné par pompe comprenant une pompe de commande de débit (58, 60) comprenant un orifice de refoulement de fluide (64), un passage de signal (66) qui communique avec l'orifice de refoulement de pompe de commande de débit (64) ainsi qu'un moyen d'orifice de commande (69, 70) communiquant avec le passage de signal (66) pour développer une pression de vitesse dans le passage de signal (66), le moyen de soupape de commande de débit (46) communiquant avec le passage de signal (66) pour établir la communication avec l'orifice d'admission (26) et l'orifice de refoulement (36) de l'autre pompe (18, 20) en réponse à une augmentation dudit signal de pression de vitesse.

3. Pompe à fluide à double capacité selon la revendication 1, dans laquelle la pompe de commande de débit (58, 60) comprend une paire d'engrenages de pompe (58, 60) comportant un orifice d'admission (68) qui communique avec une alimentation en fluide basse pression (28), le moyen de soupape de commande de débit (46) comprenant un élément de soupape à navette (48) sur laquelle est formée une zone de pression de vitesse, un moyen (56) sollicitant l'élément de soupape à navette (48) avec une force qui s'oppose à la force exercée par la pression de vitesse, l'élément de soupape à navette (48) comportant des portées de soupape espacées (50, 52) assurant une communication entre les orifices d'admission (26) et de refoulement (36) de la seconde paire d'éléments de pompage (18, 20) lorsque l'élément de soupape à navette (48) est décalé par la pression de vitesse contre la force exercée par le moyen de sollicitation (56).

4. Pompe à fluide à double capacité selon la revendication 2, dans laquelle la pompe de commande de débit (58, 60) comprend une paire d'engrenages de pompe (58, 60) comportant un orifice d'admission (68) qui communique avec une alimentation en fluide basse pression (28), le moyen de soupape de commande de débit (46) comprenant un élément de soupape à navette (48) sur laquelle est formée une surface de pression de vitesse, un ressort de soupape (56) agissant sur l'élément de soupape à navette (48), l'élément de soupape à navette (48) comportant des portées de soupape espacées (50, 52) qui assurent une communication entre les orifices d'admission (26) et de refoulement (36) de l'autre (18, 20) des pompes (18, 22 ; 18, 20) lorsque l'élément de soupape à navette (48) est décalé par la pression de vitesse contre la force exercée par le ressort de soupape (56).

5. Pompe à fluide à double capacité selon la revendication 2 ou 4, dans laquelle les première (18, 22) et seconde (18, 20) pompes possèdent un engrenage de pompe commun (18), un élément (20 ; 22) de chacune des pompes (18, 22 ; 18, 20) comprenant un engrenage de pompe (20 ; 22) qui s'engrène avec l'engrenage de pompe commun (18) et forme ainsi deux étages de pompage.

6. Pompe à fluide à double capacité selon la revendication 1 ou 3, dans laquelle les paires d'éléments de pompage (18, 22 ; 18, 20) possèdent un engrenage de pompe commun (18), un élément (20 ; 22) de chacune des paires (18, 22 ; 18, 20) comprenant un engrenage de pompe (20 ; 22) qui s'engrène avec l'engrenage de pompe commun (18) et forme ainsi deux étages de pompage.
